# EUROPEAN PATENT APPLICATION

(11) **EP 4 389 332 A1**
(43) Date of publication of application: **26.06.2024**
(21) Application number: 23211256.5
(22) Date of filing: 21.11.2023
(51) Int. Cl.: B23D 61/00

(54) **PRECISION TOOL ACCESSORY**

(30) Priority: 19.12.2022 US 202218083664
(71) Applicant: Robert Bosch GmbH, 70442 Stuttgart (DE)
(72) Inventor: Gabel, Michael, Park Ridge, IL 60068 (US); Rubens, Jeremy, Palatine, IL 60067 (US)
(74) Representative: Isarpatent

(57) **Abstract**

An accessory (100) for a power tool (1) includes a body (101) having a mounting portion (120) configured to engage with a mounting device of the power tool (1). The body (101) also includes a working portion (130) that is applied against a workpiece to effect a desired change to the workpiece such as cutting. The accessory (100) also includes a working plate (134) that is fixed to the working portion (130) and cooperates with the working portion (130) to improve the cutting quality of the accessory (100) including providing a precise cut start. The working plate (134) has a hardness that is greater than that of the body (101).

## Description

### BACKGROUND

Oscillating power tools generally have a motor, an output shaft, and a transmission that connects the motor to the output shaft and converts rotary motion of the motor to oscillating motion of the output shaft. The output shaft is coupled to an accessory attachment mechanism that is used to removably attach various types of accessories, such as cutting tools, saw blades, and sanding tools, to the output shaft.

Some accessories in the form of saw blades, for example plunge cut saw blades, include a main body having an integral working edge that defines a set of saw teeth. When viewed in top plan view the working or cutting edge is straight (e.g., linear) and extends between opposite working edge corners. Such blades, when used in an oscillating power tool, may initially contact a workpiece at the working edge corners thereof. For example, when starting the cut and before the blade is engaged in the material of the workpiece, the blade corner impacts the workpiece which results in an equal and opposite load received in the tool. This may make it difficult to start cuts and may cause the blade to walk with respect to the workpiece surface and cut unintended areas. This effect is exaggerated as the blade gets wider. Thus, it is desirable to provide a blade accessory for a power tool that provides cut initiation having improved accuracy and decreased impact load.

### SUMMARY

Example embodiments of a tool accessory including the mounting interface relate to blades or other devices used with oscillating power tools. The term "oscillating" is used herein to refer to a back-and-forth motion in any direction whether it be in the same plane as a working edge of the accessory, as is often the case when referring to "oscillating tools" in general parlance, or reciprocating in a plane that is perpendicular to the working edge, as is the case when referring to "reciprocating saws" in general parlance. Therefore, embodiments for either type of motion, as well as others, are included in the scope of the claims presented herein.

The accessory is used to effect a change in a surface of a workpiece, and may perform sanding, buffing, cutting, grinding, scoring and/or other operations on the workpiece. To this end, the accessory includes a body formed of a first material, and a working plate that is joined to the body and is formed of a second material having a hardness that is greater than the hardness of the body. The working plate cooperates with the body to provide a cutting edge that is applied against the workpiece to effect the desired change.

The accessory body includes a mounting portion having features that permit mounting to a clamping device of a power tool. The mounting features include a spindle slot that receives a spindle of the clamping device, and pin openings that partially surround the spindle slot. The pin openings are shaped and dimensioned to receive pins provided on a clamping flange of the clamping device.

The working plate is a plate having leading portion that defines a leading portion cutting edge that configured to permit precise cuts to be made in a workpiece regardless of accessory width. The leading portion cutting edge protrudes outward from the body and a width of the leading portion is less than the width of the body second end. In use, since the relatively narrow leading portion protrudes outward from the cutting edge defined by the body second end, the leading portion engages the material of the workpiece and anchors the accessory to the workpiece in a desired position while the wider cutting edge of the body second end engages the workpiece. By this configuration, the accessory cleanly and precisely engages the workpiece, and "walking" of the accessory relative to the workpiece is avoided. As a result, the accessory permits a clean start to the cut.

In some aspects, an accessory for a power tool includes a body that is a plate and is formed of a first material. The body includes a midline that bisects the body and extends through each of a body first end and a body second end. The body second end is opposite to and faces away from the body first end. A length of the body is measured in a direction parallel to the midline and corresponds to a distance between the body first end and the body second end. The body includes a width measured in a direction perpendicular to the midline and a thickness measured in a direction perpendicular to the length and width. The thickness of the body has a dimension that is less than the dimensions of the length and the width of the body. The body includes a mounting portion that adjoins the body first end and is configured to allow connection of the accessory to a power tool. In addition, the body includes a working portion that is configured to perform a cutting operation on a workpiece and adjoins the body second end. The accessory also includes a working plate that is fixed to the working portion and cooperates with the working portion to perform a cutting operation on a workpiece. The working plate is formed of a second material, the second material having a hardness that is greater than the hardness of the first material. The working plate includes a connection portion that is fixed to the working portion, and a leading portion that defines a leading portion cutting edge. The leading portion protrudes relative to the body second end in a direction parallel to the midline. In addition, a width of the leading portion is less than the width of the body second end.

In some embodiments, the leading portion cutting edge defines a series of teeth.

In some embodiments, the body second end defines a body cutting edge, and each of the first leading portion cutting edge and the body cutting edge define a series of teeth.

In some embodiments, the leading portion cutting edge is parallel to the body second end and is offset relative to the body second end.

In some embodiments, the leading portion cutting edge is acutely angled relative to the body second end.

In some embodiments, the leading portion cutting edge includes a first edge portion, a second edge portion, and an apex. The apex is defined at the intersection of the first edge portion with the second edge portion and is spaced apart from the body second end.

In some embodiments, the connection portion of the working plate overlies the body second end.

In some embodiments, the body includes a cut out, and the working plate is disposed in the cut out.

In some embodiments, the cut out is a recess.

In some embodiments, the cut out is a through hole.

In some embodiments, the working plate is fixed to the body in such a way that a first side of the working plate protrudes outward relative to the body second end in a direction parallel to the midline, and a second side of the working plate is spaced apart from the body second end in a direction parallel to the midline and overlies the body.

In some embodiments, the first side of the working plate is linear and parallel to the body second end, and the second side of the working plate is linear and parallel to the body second end.

In some embodiments, a width of the first side of the working plate is less than a width of the second side of the working plate.

In some embodiments, the first side of the working plate is linear and parallel to the body second end, and the second side of the working plate is curved.

In some embodiments, the first side of the working plate is curved, and the second side of the working plate curved.

In some embodiments, the first side of the working plate includes a first linear portion, a second linear portion that is angled relative to the first linear portion and intersects the first linear portion, and a first side apex that is defined at the intersection of the first linear portion and the second linear portion.

In some embodiments, the second side of the working plate includes a third linear portion, a fourth linear portion that is angled relative to the third linear portion and intersects the third linear portion, and a second side apex that is defined at the intersection of the third linear portion and the second fourth linear portion.

In some embodiments, the first side apex and the second side apex coincide with the midline.

### BRIEF DESCRIPTION OF THE FIGURES

Fig. 1 is a cross sectional view of a power tool showing the accessory clamping device in the clamped position without an accessory connected thereto.
Fig. 2 is a cross sectional view of the front portion of the power tool of FIG. 1, showing the clamping device in the unclamped position and an accessory disposed between the clamping flange and spindle head of the clamping device.
Fig. 3 is a cross-sectional view of the accessory as seen along line 3-3 of Fig. 2.
Fig. 4 is a top plan view of the accessory of Fig. 2.
Fig. 5 is a top plan view of an alternative embodiment of the accessory.
Fig. 6 is a top plan view of another alternative embodiment of the accessory.
Fig. 7 is a top plan view of another alternative embodiment of the accessory.
Fig. 8 is a top plan view of another alternative embodiment of the accessory.
Fig. 9 is a top plan view of another alternative embodiment of the accessory.
Fig. 10 is a top plan view of another alternative embodiment of the accessory.
Fig. 11 is a cross-sectional view of another alternative embodiment of the accessory as seen along line 3-3 of Fig. 2.
Fig. 12 is a cross-sectional view of another alternative embodiment of the accessory as seen along line 3-3 of Fig. 2.

### DETAILED DESCRIPTION

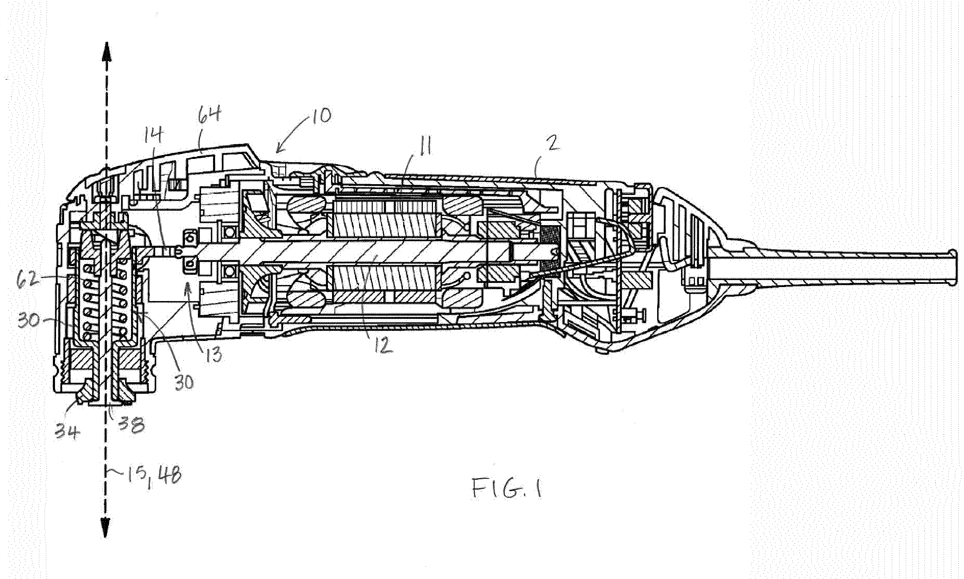

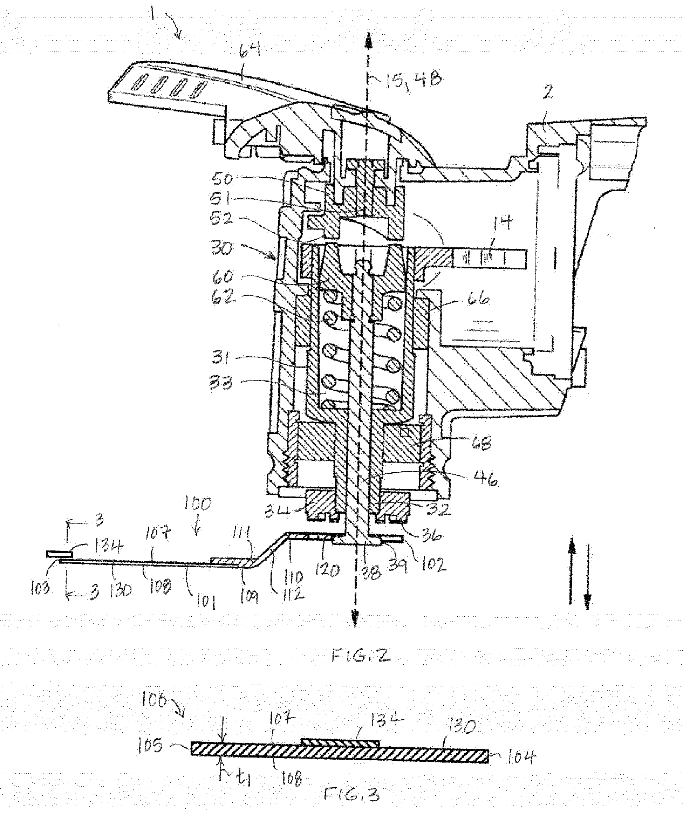

Referring to Figs. 1 and 2, an accessory 100 is mounted on (e.g., fixedly connected to) an output shaft of a power tool 1. When used with an oscillating and/or rotating power tool 1, the accessory 100 is driven to oscillate and/or rotate via a motor 11 disposed within a tool housing 2 of the power tool 1. To this end, the power tool 1 includes a drive system 10 and an accessory attachment mechanism that includes a clamping device 30 at least partially positioned within the tool housing 2. The accessory 100 includes a body 101 having a mounting portion 120 configured to engage with the clamping device 20, whereby the accessory 100 may be secured to the power tool. The body 101 also includes a working portion 130 that is applied against a workpiece (not shown) to effect a desired change to a workpiece (not shown) such as cutting. The accessory 100 also includes a working plate 134 that is fixed to the working portion 130 and cooperates with the working portion 130 to improve the cutting quality of the accessory 100 including providing a precise cut start. Details of the body 101 and working plate 134 of the accessory 100 are described below.

The drive system 10 of the power tool 1 includes an electric motor 11 and a transmission 13. The electric motor 11 includes a motor shaft 12 and is provided as any electric motor known to those of ordinary skill in the art. The transmission 13 is coupled to the motor shaft 12 and includes a drive lever 14. The transmission 13 converts rotation of the motor shaft 12 into oscillatory movement of the drive lever 14 about an axis of oscillation 15.

The clamping device 30 includes an output shaft 31, a clamping flange 34, a spindle 46 that terminates in a spindle head 38, a follower 60, an actuator provided as a cam 50, a biasing spring 62, and a handle 64.

The output shaft 31 is rotatably supported in the housing 2 by an upper bearing assembly 66 and a lower bearing assembly 68. The output shaft 31 defines a cavity 33 in which the biasing spring 62 and the spindle 46 are at least partially positioned. A lower portion 32 of the output shaft 31 extends from the housing 2. The output shaft 31 is coupled to the drive lever 14. Accordingly, the output shaft 31 oscillates about the axis of oscillation 15, along with the drive lever 14, when the motor 11 is energized. Specifically, the output shaft 31 rotates back and forth through a range of approximately two degrees to three degrees of rotation.

The clamping flange 34 is fixedly connected to the lower portion 32 of the output shaft 31 and is positioned outside of the housing 2. The clamping flange 34 is coupled to the drive system 10 through the output shaft 31. The clamping flange 34 oscillates about the axis of oscillation 15 with the output shaft 31 and in the same manner as the output shaft 31 when the electric motor 11 is energized.

The clamping flange 34 receives the accessory 100 and, in the illustrated embodiment, includes a plurality of protrusions or pins 36. The pins 36 protrude away from the tool housing 2 and toward the spindle head 38. The pins 36 are arranged in a circular pattern centered about the axis of oscillation 15. When the accessory 100 is mounted in the clamping device 30, the pins 36 are received in corresponding pin openings 126 provided in the accessory 100, as discussed in detail below. The pins 36 serve as drive pins that transmit the motion of the clamping device 30 to the accessory 100.

The spindle head 38 is provided on an end of the spindle 46 near the clamping flange 34 and serves as a second clamping flange of the clamping device 30. The spindle head 38 defines a generally circular periphery 39 of greater diameter than the spindle 46.

The spindle 46 extends upward from the spindle head 38 through the cavity 33 in the output shaft 31. The spindle 46 defines a longitudinally extending spindle axis 48 that is coaxial with the axis of oscillation 15. The spindle 46 and the spindle head 38 are moveable in a direction parallel to the axis of oscillation 15 as represented by arrows D1, D2 in Fig. 2; however, the spindle 46 is fixedly connected to the power tool 1 and is not removable from the power tool 1 during the normal course of operation, including when the accessory 100 is removed from the power tool 1.

The follower 60 is fixed to an upper end of the spindle 46 opposite to the spindle head 38 and extends further outward from the spindle 46. The follower 60 is at least partially positioned within the cavity 33 of the output shaft 31. The follower 60 is a unitary component and includes a pair of protrusions that each have a corresponding follower surface that engages and/or interacts with the cam 50. The follower 60 has a generally circular periphery and the protrusions are located on diametrically opposite sides from each other.

The cam 50 of the clamping device 30 is positioned within the housing 2 above the follower 60 and at least partially within the cavity 33 in the output shaft 31. The cam 50 defines a generally circular periphery having a center point 51 that is aligned with the axis of oscillation 15. The cam 50 includes a cam surface 52 positioned to interact with the follower 60.

The cam 50 is rotatably positioned within the housing 2 for rotation about the center point 51 between a clamped position (Fig. 1) and an unclamped position (Fig. 2). When the cam 50 is in the clamped position, the clamping device 30 is in the clamped position. In addition, when the cam 50 is in the unclamped position, the clamping device 30 is in the unclamped position.

The handle 64 of the clamping device 30 is connected to the cam 50 with a fastening member such that rotation of the handle 64 results in rotation of the cam 50. The handle 64 is shown in Fig. 1 with the clamping device 30 in the clamped position, and the handle is shown in Fig. 2, with the clamping device in the unclamped position.

The biasing spring 62 is a compression spring positioned in the cavity 33 of the output shaft 31 between the output shaft 31 and the follower 60. The spring 62 biases the follower 60, the spindle head 38, and the spindle 46 toward the cam 50 for each position of the cam 50. When the clamping flange 34 has received an accessory 100 and the clamping device 30 is in the clamped position, the biasing spring 62 biases the spindle head 38 against the accessory 100, thereby clamping the accessory 100 between the spindle head 38 and the clamping flange 34.

The components of the clamping device 30 are formed from hard and wear resistant materials. Accordingly, the output shaft 31, the clamping flange 34, the spindle head 38, the spindle 46, the follower 60, and the cam 50 may be formed from metal, hard plastics, and/or other like materials as known by those of ordinary skill in the art.

Referring to Figs. 2-4, the accessory 100 may be, for example, a cutting blade. In this example, the accessory 100 includes a body 101 and a working plate 134 that is fixed to the body 101 and provides at least a portion of the cutting edge of the accessory 100.

The body 101 is a thin, rigid plate that has a broad first surface 107, a broad second surface 108 that is opposite the first surface 107, and a narrow peripheral surface (periphery) 109 that extends between the first and second surfaces 107, 108. The body 101 is generally rectangular when viewed in top plan view. By this configuration, the periphery 109 includes a first end 102, a second end 103 and a pair of parallel lateral sides 104, 105 that extend between the first and second ends 102, 103. The body 101 is elongate so that the lateral sides 104, 105 are longer than the first and second ends 102, 103. The body 101 also includes a longitudinal midline 106 that is parallel to and midway between the respective lateral sides 104, 105.

The body 101 has a length ℓ1 that corresponds to a dimension in a direction parallel to the midline 106, e.g., a distance between the first and second ends 102, 103. The body 101 has a width w1 corresponding to a dimension perpendicular to the midline 106, e.g., a distance between the lateral sides 104, 105. In addition, the body 101 has a thickness t1 corresponding to a dimension perpendicular to the midline 106 and the width, e.g., a distance between the first and second surfaces 107, 108. As a plate, the thickness t1 of the body 101 is much less than the length ℓ1 and width w1 of the body 101.

The body 101 is non-planar, and includes a pair of closely spaced, parallel bends 110, 111 that are located closer to second end 103 than the first end 102. As a result, the body 101 includes a planar first portion disposed between the first end 102 and the first bend 110 referred to as the mounting portion 120. The body 101 includes a planar second portion disposed between the second bend 111 and the second end 103 referred to as the working portion 130. In addition, the body 101 includes a third portion referred to as the angled portion 112 that extends between the mounting portion 120 and the working portion 130 and is disposed between the first and second bends 110, 111. The angled portion 112 is angled relative to the working and mounting portions 120, 130 so that the mounting portion 120 and the working portion 130 are parallel and offset with respect to each other in an axial direction. The term "axial direction" refers to an axis that is parallel to the spindle axis 48, keeping in mind that the working and mounting portions 120, 130 are perpendicular to the spindle 46 when the accessory 100 is mounted in the clamping device 30. Thus, the term "axial direction" as used herein also refers to a direction that is perpendicular to the first and second surfaces 107, 108 of the mounting and working portions 120, 130.

The mounting portion 120 of the body 101 is disposed between the body first end 102 and the angled portion 112, and includes features that permit mounting to the clamping device 30 of the power tool 1. The mounting features include a spindle slot 121 that receives the spindle 46 of the clamping device 30. In addition, the mounting features include pin openings 126 that partially surround the spindle slot 121. The spindle slot 121 and the pin openings 126 are "through openings," e.g., they are openings that extend through the thickness of the mounting portion 120 between the first surface 107 and the second surface 108.

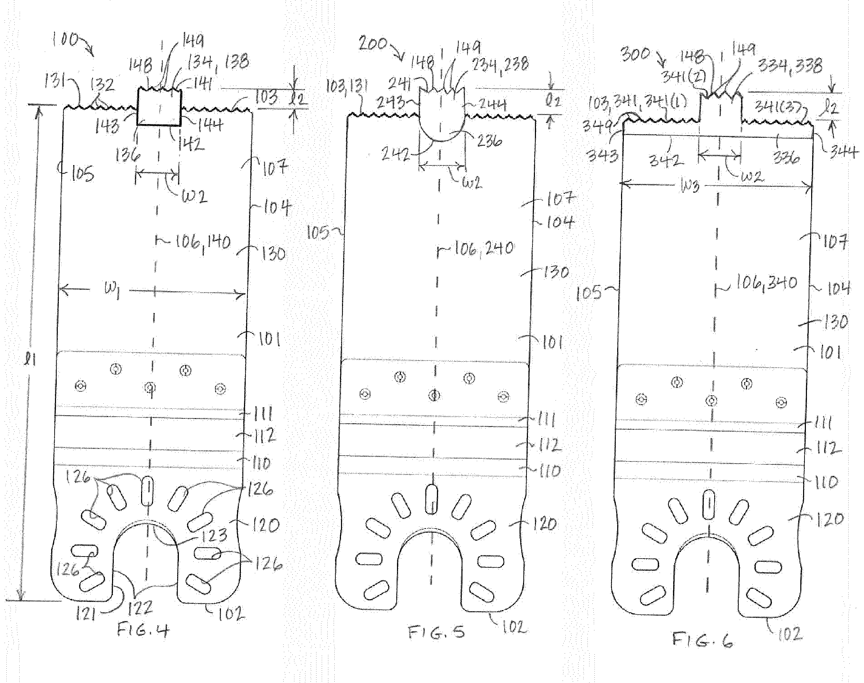

The spindle slot 121 is a concave cutout that intersects the body first end 102. When the accessory 100 is viewed in top plan view (Fig. 4), the spindle slot 121 is generally U-shaped and includes linear portions 122 that are joined by a curved portion 123. The linear portions 122 are parallel to the accessory lateral sides 104, 105, and the curved portion 123 corresponds to a - semi-circular arc that opens facing the body first end 102. In the illustrated embodiment, the curved portion 123 has a diameter that is greater than the maximum diameter of the spindle 46.

The pin openings 126 are arranged along an arc that surrounds the spindle slot 121. The pin openings 126 are shaped and dimensioned to receive pins 36 provided on the clamping flange 34 of the clamping device 30. The pin openings 126 are positioned around the spindle slot 121 so as to be in alignment with the pins 36 on the clamping flange 34. The pin openings 126 are sized to receive the pins 36 with very little clearance between the pins 36 and the pin openings 126.

In use, the accessory 100 is securely attached to the power tool 1 via engagement between the mounting portion 120 and the clamping device 30 of the power tool 1.

The working portion 130 of the body 101 is disposed between the body second end 103 and the angled portion 112. The working portion 130 includes a working edge 131 that is applied against a workpiece (not shown) to effect a desired change to the workpiece such as cutting. The working edge 131 corresponds to the body second end 103, which is a portion of the peripheral surface 109. The working edge 131 is perpendicular to and extends between the body lateral sides 104, 105. In this example in which the accessory 100 is a cutting accessory (e.g., a cutting blade), the working edge 131 defines a series of cutting teeth 132.

The accessory 100 includes the working plate 134 that is fixed to the working portion 130 so as to overlie the working edge 131 (e.g., the body second end 103). The working plate 134 is a thin, rigid plate that has a hardness that is greater than the hardness of the body 101. For example, in some embodiments, the hardness of the working plate 134 is twice the hardness of the body 101, while in other embodiments the hardness of the working plate 134 is three times, four times or more the hardness of the body 101. The working plate 134 includes a connection portion 136 that is fixed to the body 101, and a leading portion 138 that protrudes relative to the body 101 and defines a leading portion cutting edge 148.

When viewed in top plan view, the working plate 134 has a profile in the shape of a rectangle and thus includes a linear first side 141, a linear second side 142 that is parallel to and opposite the first side 141, and linear, parallel lateral sides 143, 144 that extend between the first side 141 and the second side 142. The leading portion 138 includes the first side 141 of the working plate 134, while the connection portion 136 includes the second side 142. The working plate 134 is secured to the body 101 in such a way that the first and second sides 141, 142 are parallel to the working edge 131 of the working portion 130. In addition, a longitudinal midline 140 of the working plate 134 coincides with the midline 106 of the body 101.

The first side 141 of the working plate 134 corresponds to the leading portion cutting edge 148. The leading portion cutting edge 148 defines a series of teeth 149 such as saw teeth. In the illustrated embodiment, the teeth 149 of the leading portion cutting edge 148 have the same spacing, shape and dimensions as the cutting teeth 132 of the working edge 131 of the body working portion 130. However, in other embodiments the teeth 149 of the leading portion cutting edge 148 and the working edge cutting teeth may differ in one or more of spacing, shape and dimensions.

The second side 142 and the lateral sides 143, 144 of the working plate 134 are free of teeth.

The working plate 134 is arranged relative to the body 101 such that the leading portion 138 including the leading portion cutting edge 148 protrudes relative to the body second end 103 in a direction parallel to the midline 106. For example, the leading portion 138 protrudes an amount f2 that is in a range of one percent to four percent of the length ℓ1 of the body 101. In the illustrated embodiment, leading portion 138 protrudes an amount f2 that is two percent of the length ℓ1 of the body 101.

In addition, the leading portion 138 has a width w2 corresponding to a distance between the lateral sides 143, 144 that is less than the width of the working edge 131 (e.g., less than a width of the body 101 w1). For example, the width w2 of the leading portion 138 may be in a range of twenty percent to fifty percent of the width w1 of the working edge 131. In the illustrated embodiment, the width w2 of the leading portion 138 is thirty percent of the width w1 of the working edge 131.

By configuring the leading portion 138 to protrude relative to the body second end 103 in a direction parallel to the midline 106 an amount f2 that is in a range of one percent to four percent of the length ℓ1 of the body 101, and to have a width w2 that is in a range of twenty percent to fifty percent of the width w1 of the working edge 131, in use the leading portion 138 engages the workpiece before engagement by any other part of the accessory 100 including the working edge 131, e.g., including the cutting teeth 132 of the working portion 130. This allows the accessory 100 to be located relative to the workpiece and to maintain a desired position relative to the workpiece while the wider cutting edge of the working edge 131 becomes engaged with the workpiece. As a result, the start of the cut into the workpiece is made more precisely and more cleanly than is achieved by some conventional accessories.

The connection portion 136 overlies the working portion 130 at a location adjacent to the working edge 131. The connection portion 136 has a width w2 corresponding to the distance between the lateral sides 143, 144. The connection portion 136 is secured to the first surface 107 of the working portion 130 using known techniques such as, but not limited to, welding or brazing.

Referring to Fig. 5, an alternative embodiment accessory 200 is similar to the accessory 100 described above with respect to Figs. 2-4, and common reference numbers are used to refer to common elements. The accessory 200 of Fig. 5 differs from the accessory 100 of Figs. 2-4 in that the accessory 200 of Fig. 5 includes a working plate 234 that, when seen in top plan view, has a different profile as compared to the working plate 134 of the accessory 100 of Figs. 2-4.

As in the previous embodiment, the working plate 234 is fixed to the working portion 130 so as to overlie the working edge 131 (e.g., the body second end 103). The working plate 234 is a thin, rigid plate that has a hardness that is greater than the hardness of the body 101. For example, in some embodiments, the hardness of the working plate 234 is twice the hardness of the body 101, while in other embodiments the hardness of the working plate 234 is three times, four times or more the hardness of the body 101. The working plate 234 includes a connection portion 236 that is fixed to the body 101, and a leading portion 238 that protrudes relative to the body 101.

When viewed in top plan view (Fig. 5), the working plate 234 has rectangular leading portion 238 and a semi-circular connection portion 236. The working plate 234 includes a linear first side 241, a curved second side 242 that is opposite the first side 241, and linear, parallel lateral sides 243, 244 that extend between the first side 241 and the second side 242. The leading portion 238 includes the first side 241 of the working plate 234, while the connection portion 236 includes the second side 242. The working plate 234 is secured to the body 101 in such a way that the first side 241 is parallel to the working edge 131 of the working portion 130. In addition, the longitudinal midline 240 of the working plate 234 coincides with the midline 106 of the body 101.

The working plate 234 is arranged relative to the body 101 such that the leading portion 238 including the leading portion cutting edge 148 protrudes relative to the body second end 103 in a direction parallel to the midline 106. For example, leading portion 238 protrudes an amount f2 that is in a range of one percent to four percent of the length ℓ1 of the body 101. In the illustrated embodiment, the leading portion 238 protrudes an amount f2 that is two percent of the length ℓ1 of the body 101.

In addition, the leading portion 238 has a width w2 corresponding to a distance between the lateral sides 243, 244 that is less than the width w1 of the working edge 131 (e.g., less than a width of the body second end 103). For example, the width w2 of the leading portion 238 may be in a range of twenty percent to fifty percent of the width w1 of the working edge 131. In the illustrated embodiment, the width w2 of the leading portion 238 is thirty percent of the width w1 of the working edge 131.

The leading portion 238 protrudes relative to the body 101 and defines the leading portion cutting edge 148 including the teeth 149. The second side 242 and the lateral sides 243, 244 of the working plate 234 are free of teeth.

The connection portion 236 overlies the working portion 130 at a location adjacent to the working edge 131. The connection portion 136 has a width w2 corresponding to the distance between the lateral sides 243, 244. The connection portion 236 is secured to the first surface 107 of the working portion 130 using known techniques such as, but not limited to, welding or brazing.

Referring to Fig. 6, an alternative embodiment accessory 300 is similar to the accessory 100 described above with respect to Figs. 2-4, and common reference numbers are used to refer to common elements. The accessory 300 of Fig. 6 differs from the accessory 100 of Figs. 2-4 in that the accessory 300 of Fig. 6 includes a working plate 334 that, when seen in top plan view, has a different profile as compared to the working plate 134 of the accessory 100 of Figs. 2-4.

As in the previous embodiments, the working plate 334 is fixed to the working portion 130 so as to overlie the working edge 131 (e.g., the body second end 103). The working plate 334 is a thin, rigid plate that has a hardness that is greater than the hardness of the body 101. For example, in some embodiments, the hardness of the working plate 334 is twice the hardness of the body 101, while in other embodiments the hardness of the working plate 334 is three times, four times or more the hardness of the body 101. The working plate 334 includes a connection portion 336 that is fixed to the body 101, and a leading portion 338 that protrudes relative to the body 101.

When viewed in top plan view (Fig. 6), the working plate 334 has a rectangular leading portion 338 and a rectangular connection portion 336 having different proportions than that of the connection portion 136 of the accessory 100 and of the leading portion 338. In particular, a width w3 of the connection portion 336 is much greater than a width w2 of the leading portion 338, whereby the working plate 334 is generally T shaped when viewed in top plan view. The working plate 334 includes a first side 341 that includes three linear portions 341(1), 341(2), 341(3) that are stepwise offset from each other. In the illustrated embodiment, the second, central linear portion 341(2) protrudes relative to the first and third linear portions 341(1), 341(3) in a direction parallel to the midline 106. The first and third linear portions 341(1), 341(3) substantially overlie the working portion working edge 131. The working plate 334 includes a second side 342 that is linear and parallel to the linear portions of the first side 341. The working plate 334 also includes linear, parallel lateral sides 343, 344 that extend between the first side 341 and the second side 342. The leading portion 338 includes the central, second linear portion 341(2) of the first side 341, while the connection portion 336 includes the second side 342. The working plate 334 is secured to the body 101 in such a way that each linear portion 341(1), 341(2), 341(3) of the first side 341 is parallel to the working edge 131 of the working portion 130. In addition, the longitudinal midline 340 of the working plate 334, which laterally bisects the second linear portion 341(2) of the first side 341, coincides with the midline 106 of the body 101.

The working plate 334 is arranged relative to the body 101 such that the leading portion 338 (e.g., the central, second linear portion 341(2) of the first side 341) including the leading portion cutting edge 148 protrudes relative to the body second end 103 in a direction parallel to the midline 106. For example, leading portion 338 protrudes an amount ℓ2 that is in a range of one percent to four percent of the length ℓ1 of the body 101. In the illustrated embodiment, the leading portion 338 protrudes an amount ℓ2 that is two percent of the length ℓ1 of the body 101.

In addition, the leading portion 338 has a width w2 corresponding to a distance between the first and third linear portions 341(1), 341(3) that is less than the width w1 of the working edge 131 (e.g., less than a width of the body second end 103). For example, the width w2 of the leading portion 338 may be in a range of twenty percent to fifty percent of the width w1 of the working edge 131. In the illustrated embodiment, the width w2 of the leading portion 338 is thirty percent of the width w1 of the working edge 131. In addition, a width w3 of the connection portion 336 corresponds to a width w1 of the working edge 131 of the working portion 130.

The leading portion 338 protrudes relative to the body 101 and defines the leading portion cutting edge 148 including the teeth 149. The first and third linear portions 341(1), 341(3) also include teeth 349 having the same spacing, shape and dimensions as the teeth 149 that form the leading portion cutting edge 148. The second side 342 and the lateral sides 343, 344 of the working plate 334 are free of teeth.

The connection portion 336 overlies the working portion 130 at a location adjacent to the working edge 131. The connection portion 336 is secured to the first surface 107 of the working portion 130 using known techniques such as, but not limited to, welding or brazing.

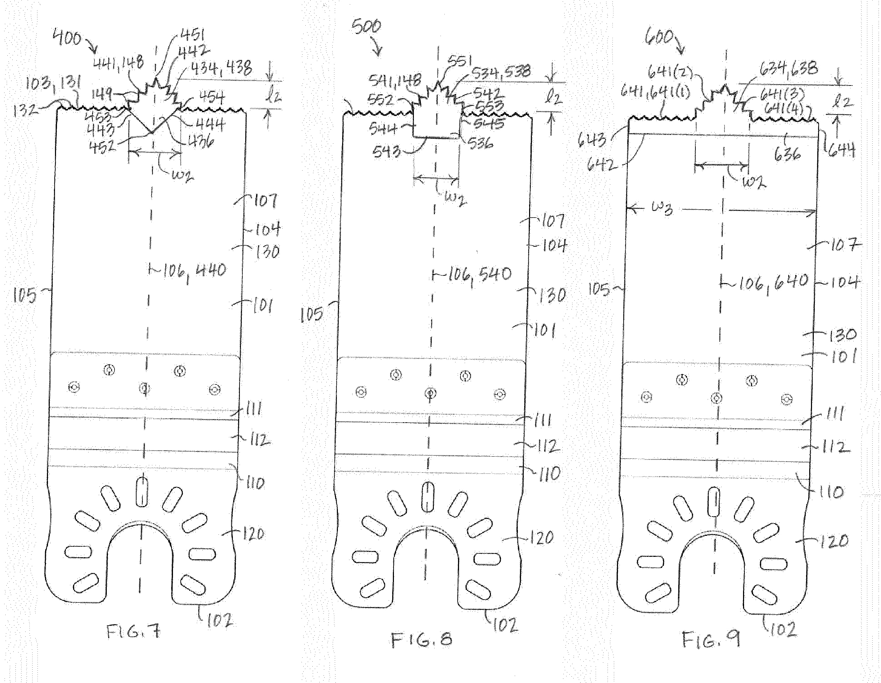

Referring to Fig. 7, an alternative embodiment accessory 400 is similar to the accessory 100 described above with respect to Figs. 2-4, and common reference numbers are used to refer to common elements. The accessory 400 of Fig. 7 differs from the accessory 100 of Figs. 2-4 in that the accessory 400 of Fig. 7 includes a working plate 434 that, when seen in top plan view, has a different profile as compared to the working plate 134 of the accessory 100 of Figs. 2-4.

As in the previous embodiments, the working plate 434 is fixed to the working portion 130 so as to overlie the working edge 131 (e.g., the body second end 103). The working plate 434 is a thin, rigid plate that has a hardness that is greater than the hardness of the body 101. For example, in some embodiments, the hardness of the working plate 434 is twice the hardness of the body 101, while in other embodiments the hardness of the working plate 434 is three times, four times or more the hardness of the body 101. The working plate 434 includes a connection portion 436 that is fixed to the body 101, and a leading portion 438 that protrudes relative to the body 101.

When viewed in top plan view (Fig. 7), the working plate 434 has triangular leading portion 438 and a triangular connection portion 436, whereby the profile of the working plate 434 is diamond-shaped. The working plate 334 includes a linear first side 441 and a linear second side 442 that is adjoins the first side 441. The first side 441 is angled relative to the second side 442, and a first apex 451 is formed at the intersection of the first and second sides 441, 442. The working plate 434 includes a linear third side 443 that adjoins the first side 441 and a linear fourth side 444 that adjoins the second side 442. The third side 443 is angled relative to the fourth side 444, and a second apex 452 is formed at the intersection of the third and fourth sides 443, 444. The third side 443 is angled relative to the first side 441, and a third apex 453 is formed at the intersection of the first and third sides 441, 443. In addition, the fourth side 444 is angled relative to the second side 442, and a fourth apex 454 is formed at the intersection of the second and fourth sides 442, 444. In the illustrated embodiment, each of the first, second, third and fourth apexes 451, 452, 453, 454 define a 90 degree angle, but are not limited to this angle.

The leading portion 438 includes the first side 441, the second side 442 and the first apex 451 of the working plate 434, while the connection portion 436 includes the third side 443, the fourth side 444 and the second apex 452. The leading portion 438 protrudes relative to the body 101, and the first and second sides 441, 442 together define the leading portion cutting edge 148 including the teeth 149 and the first apex 451. The third and fourth sides 443, 444 of the working plate 434 are free of teeth.

The working plate 434 is secured to the body 101 in such a way that the first side 441 and the second side 442 are acutely angled relative to the working edge 131 of the working portion 130. In addition, the longitudinal midline 440 of the working plate 434, which passes through the first and second apexes 451, 452, coincides with the midline 106 of the body 101.

The working plate 434 is further arranged relative to the body 101 such that the leading portion 438, including the first side 441, the second side 442 and the first apex 451, protrudes relative to the body second end 103 in a direction parallel to the midline 106. For example, the leading portion 438 protrudes an amount ℓ2 that is in a range of one percent to four percent of the length ℓ1 of the body 101. In the illustrated embodiment, leading portion 438 protrudes an amount ℓ2 that is two percent of the length ℓ1 of the body 101.

In addition, the leading portion 438 has a width w2 corresponding to a distance between the third and fourth apexes 453, 454 that is less than the width w1 of the working edge 131 (e.g., less than a width of the body second end 103). For example, the width w2 of the leading portion 438 may be in a range of twenty percent to fifty percent of the width w1 of the working edge 131. In the illustrated embodiment, the width w2 of the leading portion 438 is thirty percent of the width w1 of the working edge 131.

The connection portion 436, including the third side 443, the fourth side 444 and the second apex 452, overlies the working portion 130 at a location adjacent to the working edge 131. The connection portion 436 has a maximum width corresponding to the width w2 between the third and fourth apexes 453, 454. The connection portion 436 is secured to the first surface 107 of the working portion 130 using known techniques such as, but not limited to, welding or brazing.

Referring to Fig. 8, an alternative embodiment accessory 500 is similar to the accessory 100 described above with respect to Figs. 2-4, and common reference numbers are used to refer to common elements. The accessory 500 of Fig. 8 differs from the accessory 100 of Figs. 2-4 in that the accessory 500 of Fig. 8 includes a working plate 534 that, when seen in top plan view, has a different profile as compared to the working plate 134 of the accessory 100 of Figs. 2-4.

As in the previous embodiments, the working plate 534 is fixed to the working portion 130 so as to overlie the working edge 131 (e.g., the body second end 103). The working plate 534 is a thin, rigid plate that has a hardness that is greater than the hardness of the body 101. For example, in some embodiments, the hardness of the working plate 534 is twice the hardness of the body 101, while in other embodiments the hardness of the working plate 534 is three times, four times or more the hardness of the body 101. The working plate 534 includes a connection portion 536 that is fixed to the body 101, and a leading portion 538 that protrudes relative to the body 101.

When viewed in top plan view (Fig. 8), the working plate 534 has triangular leading portion 538 and a rectangular connection portion 536, whereby the profile of the working plate 534 is pentagonal. The working plate 334 includes a linear first side 541 and a linear second side 542 that adjoins the first side 541. The first side 541 is angled relative to the second side 542, and a first apex 551 is formed at the intersection of the first and second sides 541, 542. In the illustrated embodiment, the first apex 551 defines a 90 degree angle, but is not limited to this angle. The working plate 534 includes a linear third side 543 that is opposite the first apex 551, a linear fourth side 544 that extends between the first side 541 and the third side 543, and a linear fifth side 545 that extends between the second side 541 and the third side 543. The fourth 544 is parallel to and spaced apart from the fifth side 545 and is perpendicular to the third side 543. The first side 541 is angled relative to the fourth side 544, and a second apex 552 is formed at the intersection of the first and fourth sides 441, 444. The second side 542 is angled relative to the fifth side 545, and a third apex 553 is formed at the intersection of the second and fifth sides 542, 545. In the illustrated embodiment, the second and third apexes 552, 553 each define an obtuse angle for example a 135 degree angle.

The leading portion 538 includes the first side 541, the second side 542 and the first apex 551 of the working plate 534, while the connection portion 536 includes the third side 543, the fourth side 544 and the fifth side 545. The leading portion 538 protrudes relative to the body 101, and the first and second sides 541, 542 and the first apex 551 together define the leading portion cutting edge 148 including the teeth 149. The third, fourth and fifth sides 543, 544, 545 of the working plate 534 are free of teeth.

The working plate 534 is secured to the body 101 in such a way that the first side 541 and the second side 542 are acutely angled relative to the working edge 131 of the working portion 130 and the third side 543 is parallel to the working edge 131 of the working portion 130. In addition, the longitudinal midline 540 of the working plate 534, which passes through the first apex 551, coincides with the midline 106 of the body 101.

The working plate 534 is further arranged relative to the body 101 such that the leading portion 538, including the first side 541, the second side 542 and the first apex 551, protrudes relative to the body second end 103 in a direction parallel to the midline 106. For example, the leading portion 538 protrudes an amount ℓ2 that is in a range of one percent to four percent of the length ℓ1 of the body 101. In the illustrated embodiment, leading portion 538 protrudes an amount ℓ2 that is two percent of the length ℓ1 of the body 101.

In addition, the leading portion 538 has a width w2 corresponding to a distance between the second and third apexes 552, 553 that is less than the width w1 of the working edge 131 (e.g., less than a width of the body second end 103). For example, the width w2 of the leading portion 538 may be in a range of twenty percent to fifty percent of the width w1 of the working edge 131. In the illustrated embodiment, the width w2 of the leading portion 538 is thirty percent of the width w1 of the working edge 131.

The connection portion 536, including the third side 543, the fourth side 544 and the fifth side 545, overlies the working portion 130 at a location adjacent to the working edge 131. The connection portion 536 has a width w2 corresponding to the spacing between the fourth and fifth sides 544, 545, and is secured to the first surface 107 of the working portion 130 using known techniques such as, but not limited to, welding or brazing.

Referring to Fig. 9, an alternative embodiment accessory 600 is similar to the accessory 500 described above with respect to Fig. 8, and common reference numbers are used to refer to common elements. The accessory 600 of Fig. 9 differs from the accessory 500 of Fig. 8 in that the accessory 600 of Fig. 9 includes a working plate 634 that, when seen in top plan view, has a different profile as compared to the working plate 534 of the accessory 500 of Fig. 8.

As in the previous embodiments, the working plate 634 is fixed to the working portion 130 so as to overlie the working edge 131 (e.g., the body second end 103). The working plate 634 is a thin, rigid plate that has a hardness that is greater than the hardness of the body 101. For example, in some embodiments, the hardness of the working plate 634 is twice the hardness of the body 101, while in other embodiments the hardness of the working plate 634 is three times, four times or more the hardness of the body 101. The working plate 634 includes a connection portion 636 that is fixed to the body 101, and a leading portion 638 that protrudes relative to the body 101.

When viewed in top plan view (Fig. 9), the working plate 634 has a triangular leading portion 638 and a rectangular connection portion 636 having different proportions than that of the connection portion 536 of the accessory 500 of Fig. 8. A width w3 of the connection portion 636 is much greater than a width w2 of the leading portion 638, whereby the working plate 634 is generally T shaped when viewed in top plan view.

The working plate 634 includes a first side 641 that includes four linear portions 641(1), 641(2), 641(3), 641(4). The two central linear portions, e.g., the second and third linear portions 641(2), 641(3), are acutely angled relative to the laterally-outermost first and fourth linear portions 641(1), 641(4). In addition, the second linear portion 641(2) is angled relative to the third linear portion 641(3), and a first apex 651 is formed at the intersection of the second and third linear portions 641(2), 641(3). In the illustrated embodiment, the first apex 651 coincides with the midline 106 and defines an internal 90 degree angle but is not limited to this angle. The second and third linear portions 641(2), 641(3) protrude relative to the first and fourth linear portions 641(1), 641(4) in a direction parallel to the midline 106. The first and fourth linear portions 641(1), 641(4) substantially overlie the working portion working edge 131.

The working plate 634 includes a linear second side 642 that is opposite the first side 641. The second side 642 is parallel to the first and fourth linear portions 641(1), 641(4) of the first side 641.

The working plate 634 includes a linear third side 643 that extends between the first portion 641(1) of the first side 641 and the second side 642, and a linear fourth side 644 that extends between the fourth portion 641(4) of the first side 641 and the second side 642. The third and fourth sides 643, 644 are perpendicular to the second side 642.

The leading portion 638 includes the first side 641 including the four linear portions 641(1), 641(2), 641(3), 641(4) and the apex 651. The connection portion 636 includes the second side 642, the third side 643, and the fourth side 644. The leading portion 638 protrudes relative to the body 101, and the second and third linear portions 641(2), 641(3) and the first apex 651 together define the leading portion cutting edge 148 including the teeth 149. The second side 642, the third side 643, and the fourth side 644 of the working plate 634 are free of teeth.

The working plate 634 is arranged relative to the body 101 such that the leading portion 638 including the leading portion cutting edge 148 protrudes relative to the body second end 103 in a direction parallel to the midline 106. For example, leading portion 638 protrudes an amount ℓ2 that is in a range of one percent to four percent of the length ℓ1 of the body 101. In the illustrated embodiment, the leading portion 638 protrudes an amount ℓ2 that is two percent of the length ℓ1 of the body 101.

In addition, the leading portion 638 has a width w2 corresponding to a distance between the first and fourth linear portions 641(1), 641(4) that is less than the width w1 of the working edge 131 (e.g., less than a width of the body second end 103). For example, the width w2 of the leading portion 638 may be in a range of twenty percent to fifty percent of the width w1 of the working edge 131. In the illustrated embodiment, the width w2 of the leading portion 638 is thirty percent of the width w1 of the working edge 131. In addition, a width w3 of the connection portion 636 corresponds to a width of the working edge 131 of the working portion 130.

The leading portion 638 protrudes relative to the body 101 and defines the leading portion cutting edge 148 including the teeth 149. The first and fourth linear portions 641(1), 641(4) also include teeth 649 having the same spacing, shape and dimensions as the teeth 149 that form the leading portion cutting edge 148.

The connection portion 636 overlies the working portion 130 at a location adjacent to the working edge 131. The connection portion 636 is secured to the first surface 107 of the working portion 130 using known techniques such as, but not limited to, welding or brazing.

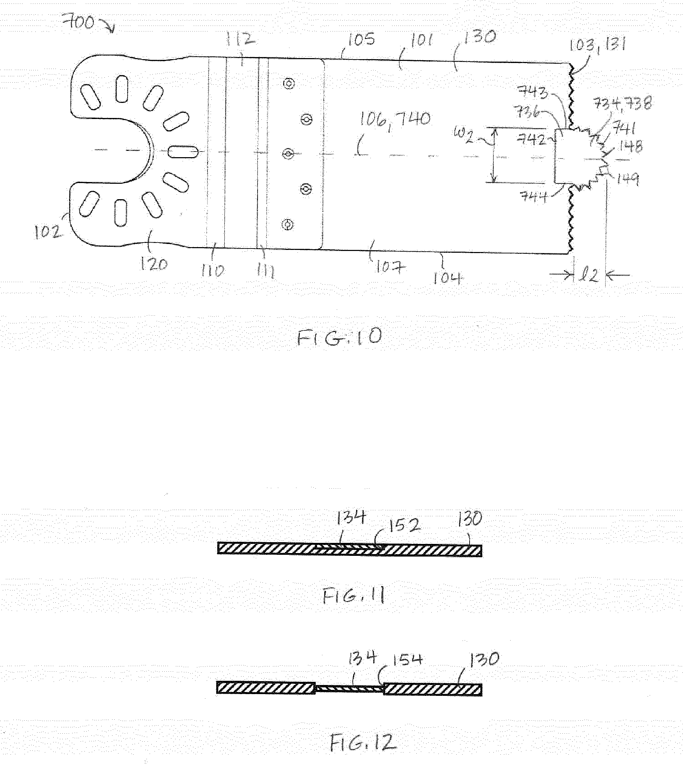

Referring to Fig. 10, an alternative embodiment accessory 700 is similar to the accessory 100 described above with respect to Figs. 2-4, and common reference numbers are used to refer to common elements. The accessory 700 of Fig. 10 differs from the accessory 100 of Figs. 2-4 in that the accessory 700 of Fig. 10 includes a working plate 734 that, when seen in top plan view, has a different profile as compared to the working plate 134 of the accessory 100 of Figs. 2-4.

As in the previous embodiment, the working plate 734 is fixed to the working portion 130 so as to overlie the working edge 131 (e.g., the body second end 103). The working plate 734 is a thin, rigid plate that has a hardness that is greater than the hardness of the body 101. For example, in some embodiments, the hardness of the working plate 734 is twice the hardness of the body 101, while in other embodiments the hardness of the working plate 734 is three times, four times or more the hardness of the body 101. The working plate 734 includes a connection portion 736 that is fixed to the body 101, and a leading portion 738 that protrudes relative to the body 101.

When viewed in top plan view (Fig. 10), the working plate 734 has curved (for example, semi-circular) leading portion 238 and a rectangular connection portion 236. The working plate 734 includes a curved first side 741, a linear second side 742 that is opposite the first side 741, and linear, parallel lateral sides 743, 744 that extend between the first side 741 and the second side 742. The leading portion 738 includes the first side 741 of the working plate 734, while the connection portion 736 includes the second side 742. The working plate 734 is secured to the body 101 in such a way that the second side 742 is parallel to the working edge 131 of the working portion 130. In addition, the center of the semicircular first side 741 of the working plate 734 coincides with the midline 106 of the body 101.

The working plate 734 is arranged relative to the body 101 such that the leading portion 738 including the leading portion cutting edge 148 protrudes relative to the body second end 103 in a direction parallel to the midline 106. For example, leading portion 738 protrudes an amount ℓ2 that is in a range of one percent to four percent of the length ℓ1 of the body 101. In the illustrated embodiment, the leading portion 738 protrudes an amount ℓ2 that is two percent of the length ℓ1 of the body 101.

In addition, the leading portion 738 has a width w2 corresponding to a distance between the lateral sides 743, 744 that is less than the width w1 of the working edge 131 (e.g., less than a width of the body second end 103). For example, the width w2 of the leading portion 738 may be in a range of twenty percent to fifty percent of the width w1 of the working edge 131. In the illustrated embodiment, the width w2 of the leading portion 738 is thirty percent of the width w1 of the working edge 131.

The leading portion 738 protrudes relative to the body 101 and defines the leading portion cutting edge 148 including the teeth 149. The second side 742 and the lateral sides 743, 744 of the working plate 734 are free of teeth.

The connection portion 736 overlies the working portion 130 at a location adjacent to the working edge 131. The connection portion 736 has a width w2 corresponding to the distance between the lateral sides 743, 744. The connection portion 736 is secured to the first surface 107 of the working portion 130 using known techniques such as, but not limited to, welding or brazing.

In the illustrated embodiments, the working plate 134, 234, 334, 434, 534, 634, 734 is secured to the first surface 107 of the working portion 130. However, the accessory is not limited to this configuration. For example, the working plate 134, 234, 334, 434, 534, 634, 734 may be secured to the second surface 108 of the working portion 130. In another example, the working plate 134, 234, 334, 434, 534, 634, 734 may be received in an opening formed in the working portion 130 and secured to the opening using known techniques. In the embodiment shown in Fig. 11, the opening is a recess 152 formed in the first surface 107 of the working portion 130. In the embodiment shown in Fig. 12, the opening is a through hole 154 formed in the working portion 130. When viewed in top plan view, the profiles of the recess 152 and the through hole 154 correspond to that of the connection portion of the working plate disposed therein, whereby the working plate may engage with respective profiles during use, whereby durability of the accessory is improved.

In the illustrated embodiments, the accessory 100 is a cutting blade having a generally rectangular profile when the accessory is viewed in top plan view, including a first end 102 that is parallel to the second end 103 and parallel lateral sides 104, 105, where the lateral sides 104, 105 are perpendicular to the first and second ends 102, 103. The accessory 100 is not limited to this configuration. For example, in some embodiments, the lateral sides 104, 105 may be non-parallel such that when the accessory is viewed in top plan view, the accessory 100 may have a generally trapezoidal or generally triangular profile. In other embodiments, the accessory 100 may have a curved or partial-circular or circular profile when viewed in top plan view.

In the illustrated embodiment, the accessory 100 includes a pair of closely spaced, parallel bends 110, 111 that are located closer to the first end 102 than the second end 103. The accessory 100 is not limited to this configuration. For example, in some embodiments, the parallel bends 110, 110 may have a different location, different spacing or be completely omitted.

In the illustrated embodiments, the midline of the working plate coincides with the midline of the body. However, the accessory is not limited to this configuration. For example, in some embodiments, the midline of the working plate is disposed between the midline of the body and a lateral side of the body.

Selective illustrative embodiments of the power tool and the accessory are described above in some detail. It should be understood that only structures considered necessary for clarifying the tool and the accessory have been described herein. Other conventional structures, and those of ancillary and auxiliary components of the tool and the accessory, are assumed to be known and understood by those skilled in the art. Moreover, while working examples of the tool and the accessory have been described above, the tool and the accessory are not limited to the working examples described above, but various design alterations may be carried out without departing from the tool and the accessory as set forth in the claims.

## Claims

1. An accessory for a power tool, the accessory comprising:
a body that is a plate and is formed of a first material, the body including
a midline that bisects the body and extends through each of a body first end and a body second end, the body second end being opposite to and facing away from the body first end,
a length measured in a direction parallel to the midline and corresponding to a distance between the body first end and the body second end,
a width measured in a direction perpendicular to the midline,
a thickness measured in a direction perpendicular to the length and width, the thickness having a dimension that is less than the dimensions of the length and the width,
a mounting portion that adjoins the body first end and is configured to allow connection of the accessory to a power tool, and
a working portion that is configured to perform a cutting operation on a workpiece and adjoins the body second end; and
a working plate that is fixed to the working portion and cooperates with the working portion to perform a cutting operation on a workpiece, the working plate being formed of a second material, the second material having a hardness that is greater than the hardness of the first material, the working plate including
a connection portion that is fixed to the working portion, and
a leading portion that defines a leading portion cutting edge, the leading portion protruding relative to the body second end in a direction parallel to the midline, a width of the leading portion being less than the width of the body second end.

2. The accessory of claim 1, wherein the leading portion cutting edge defines a series of teeth.

3. The accessory of claim 1, wherein the body second end defines a body cutting edge, each of the first leading portion cutting edge and the body cutting edge defining a series of teeth.

4. The accessory of claim 1, wherein the leading portion cutting edge is parallel to the body second end and is offset relative to the body second end.

5. The accessory of claim 1, wherein the leading portion cutting edge is acutely angled relative to the body second end.

6. The accessory of claim 1, wherein
the leading portion cutting edge comprises a first edge portion, a second edge portion, and an apex, and
wherein the apex is defined at the intersection of the first edge portion with the second edge portion and is spaced apart from the body second end.

7. The accessory of claim 1, wherein the connection portion of the working plate overlies the body second end.

8. The accessory of claim 1, wherein
the body includes a cut out, and
the working plate is disposed in the cut out.

9. The accessory of claim 8, wherein the cut out is a recess.

10. The accessory of claim 8, wherein the cut out is a through hole.

11. The accessory of claim 1, wherein the working plate is fixed to the body in such a way that
a first side of the working plate protrudes outward relative to the body second end in a direction parallel to the midline, and
a second side of the working plate is spaced apart from the body second end in a direction parallel to the midline and overlies the body.

12. The accessory of claim 11, wherein the first side of the working plate is linear and parallel to the body second end, and the second side of the working plate is linear and parallel to the body second end.

13. The accessory of claim 12, wherein a width of the first side of the working plate is less than a width of the second side of the working plate.

14. The accessory of claim 11, wherein the first side of the working plate is linear and parallel to the body second end, and the second side of the working plate is curved.

15. The accessory of claim 11, wherein the first side of the working plate is curved, and the second side of the working plate curved.

16. The accessory of claim 11, wherein the first side of the working plate includes
a first linear portion,
a second linear portion that is angled relative to the first linear portion and intersects the first linear portion, and
a first side apex that is defined at the intersection of the first linear portion and the second linear portion.

17. The accessory of claim 16, wherein the second side of the working plate includes
a third linear portion,
a fourth linear portion that is angled relative to the third linear portion and intersects the third linear portion, and
a second side apex that is defined at the intersection of the third linear portion and the second fourth linear portion.

18. The accessory of claim 17, wherein the first side apex and the second side apex coincide with the midline.
